# Europäisches Patentamt

## European Patent Office

## Office européen des brevets

(11) Veröffentlichungsnummer: **0 363 488**

**A1**

(12) **EUROPÄISCHE PATENTANMELDUNG**
veröffentlicht nach Art. 158 Abs. 3
EPÜ

(21) Anmeldenummer: 88906216.2

(22) Anmeldetag: 22.03.88

(86) Internationale Anmeldenummer:
PCT/SU88/00063

(87) Internationale Veröffentlichungsnummer:
WO 89/09107 (05.10.89 89/24)

(51) Int. Cl.⁵: **B23B 27/00**

(43) Veröffentlichungstag der Anmeldung:
18.04.90 Patentblatt 90/16

(84) Benannte Vertragsstaaten:
**AT BE CH DE FR GB IT LI LU NL SE**

(71) Anmelder: **BELORUSSKY POLITEKHNICHESKY INSTITUT**
**Leninksy pr., 65**
**Minsk, 220027(SU)**

(72) Erfinder: **DYAKOV, Igor Ivanovich**
**2 per. Bagrationa, 19-419**
**Minsk, 220037(SU)**
Erfinder: **KOCHERGIN, Anatoly Ivanovich**
**ul. V.Khoruzhei, 19-37**
**Minsk, 220123(SU)**
Erfinder: **YAKIMOVICH, Alexandr Maximovich**
**ul. Russiyanova, 32-1-94**
**Minsk, 220067(SU)**

(74) Vertreter: **Patentanwälte Zeilentin & Partner**
**Zweibrückenstrasse 15**
**D-8000 München 2(DE)**

(54) **Schneidwerkzeug zum Herstellen eines Querrippen-.**

(57) Das Schneidwerkzeug zum Herstellen eines Querrippen-Rohrelementes für Wärmetauscher enthält einen Arbeitskörper mit einer kegeligen Spanfläche (2) und einer kegeligen Freifläche (3), die sich schneiden und eine Schneidkante (4) bilden und unterschiedliche Kegelwinkel aufweisen, wobei die kegelige Spanfläche (2) und die kegelige Freifläche (3) des Arbeitskörpers gleichachsig sind und die kegelige Spanfläche (2) schraubenförmig mit einer Steigung ausgebildet ist, die den Abstand zwischen den zu schneidenden Rippen (5) des Rohrelementes für den Wärmetauscher übersteigt.

EP 0 363 488 A1

# SCHNEIDWERKZEUG ZUM HERSTELLEN EINES QUERRIPPEN-ROHRELEMENTES FÜR WÄRMETAUSCHER

## Technisches Gebiet

Die Erfindung bezieht sich auf Metallzerspanungsmittel und betrifft insbesondere Schneidwerkzeuge zum Herstellen eines Querrippen-Rohrelementes für Wärmetauscher.

## Stand der Technik

Es ist ein Schneidwerkzeug zum kontinuierlichen Schneiden von Querrippen an der Innenfläche von Rohrelementen von Wärmetauschern bekannt (FR, B, 2335282), enthaltend eine zylindrische Spanfläche des Arbeitskörpers des Schneidwerkzeuges und eine ebene, zur Achse der zylindrischen Spanfläche geneigte Freifläche, die sich schneiden und eine Schneidkante in Form einer Ellipse bilden. Das Schneidwerkzeug wird während des Schneidens radial zur zylindrischen Innenfläche des Rohrelementes angestellt. Das Rohrelement wird in Drehung versetzt, während sich das Schneidwerkzeug fortschreitend längs der Achse des Rohrelementes bewegt, wobei das Unterschneiden und Abbiegen der Metallschicht bis zur Bildung von Spiralbändern (Rippen) sichergestellt wird. Das betreffende Werkzeug läßt das Schneiden von Rippen auch an den Außenflächen zu.

Die Form der Span- und der Freifläche des Schneidwerkzeuges gestattet es jedoch nicht, günstige Schnitt- (Stärkenabnahme) winkel zu erhalten, die für eine minimale Schrumpfung der zu unterschneidenden Metallschicht und für minimale Schnittkräfte notwendig sind, wodurch den Kenngrößen der zu unterschneidenden Rippen Beschränkungen auferlegt werden und eine maximale Wärmeeffektivität der hergestellten Wärmeaustauschfläche, inbesondere beim Unterschneiden der Rippen an der Außenfläche des Rohrelementes, nicht erzielt werden kann.

Es ist ein Schneidwerkzeug zum Herstellen eines Querrippen-Rohrelementes für Wärmetauscher bekannt (JP, A, 55-36449), enthaltend eine kegelige Spanfläche des Arbeitskörpers, welche ein Teil des Mantels eines imaginären Kegels mit einem Winkel an der Spitze $Q_2$ ist, eine kegelige Freifläche, welche ein Teil des Mantels eines imaginären Kegels mit dem Spitzenwinkel $Q_1$ ist, sowie eine Schneidkante, welche die Schnittlinie der kegeligen Spanfläche und der kegeligen Freifläche des Arbeitskörpers darstellt, wobei der Winkel $Q_2$ größer als der Winkel $Q_1$ ist. Die Achse des imaginären Kegels, der die kegelige Spanfläche bildet, liegt innerhalb des Kegels, der die kegelige Freifläche bildet, wobei die Achse des letzteren parallel zur Achse des zu bearbeitenden Rohrelementes verläuft.

Durch eine solche Anordnung der imaginären Kegel, die die Schneidkante des Werkzeuges bilden, wird die Beständigkeit ihres Neigungswinkels in bezug auf die Achse des Rohrelementes sowie die Beständigkeit des Spanwinkels des Werkzeuges über die gesamte Länge der Schneidkante nicht gewährleistet, wodurch die Herstellung von hohen Rippen mit einer minimalen Schrumpfung, d.h. mit minimaler Stärkenabnahme der erhaltenen Rippen im Vergleich zur unterschnittenen Metallschicht, erschwert ist. Unter solchen Schnittbedingungen ist es unmöglich, ein Querrippen-Rohrelement herzustellen, das maximale Wärmeübertragungskenngrößen ermöglicht.

Außerdem bereitet die Herstellung der Arbeitsflächen eines solchen Schneidwerkzeuges, das Anschleifen und die Kontrolle seiner konstruktiven und geometrischen Parameter gewisse fertigungstechnische Schwierigkeiten.

Offenbarung der Erfindung

Der Erfindung liegt die Aufgabe zugrunde, ein Schneidwerkzeug zum Herstellen eines Querrippen-Rohrelementes für Wärmetauscher zu schaffen, mit dessen Hilfe die Schrumpfung der zu unterschneidenden Metallschicht

bei maximaler Rippenhöhe auf ein Mindestmaß reduziert werden kann.

Die Aufgabe der Erfindung wird dadurch gelöst, daß bei einem Schneidwerkzeug zum Herstellen eines Querrippen-Rohrelementes für Wärmetauscher, enthaltend eine kegelige Spanfläche und eine kegelige Freifläche des Arbeiskörpers, die sich schneiden, eine Schneidkante bilden und unterschiedliche Kegelwinkel aufweisen, erfindungsgemäß die kegelige Spanfläche und die kegelige Freifläche des Arbeitskörpers gleichachsig sind, wobei die kegelige Spanfläche schraubenförmig mit einer Steigung ausgebildet ist, die den Abstand zwischen den zu schneidenden Rippen des Rohrelementes für Wärmetauscher übersteigt.

Vorzugsweise kann bei dem erfindungsgemäßen Schneidwerkzeug die kegelige Freifläche des Arbeiskörpers schraubenförmig mit einer Steigung ausgebildet werden, die der Steigung der kegeligen Spanfläche des Arbeitskörpers gleich ist.

Die Ausführung der Arbeitsflächen des Schneidwerkzeuges zum Herstellen eines Querrippen-Rohrelementes für Wärmetauscher in der oben dargelegten Weise bewirkt eine Beständigkeit des Neigungswinkels der Schneidkante des Werkzeuges zu der zu unterschneidenden Metallschicht, wodurch eine minimale und über die gesamte Höhe der zu schneidenden Rippe gleichmäßige Schrumpfung sichergestellt wird. Unter solchen Schnittbedingungen lassen sich hohe Rippen herstellen, die zur Vergrößerung der wirksamen Wärmeaustauschfläche und zur Verbesserung der wärmeübertragenden Parameter der Wärmetauscher beitragen.

## Beschreibung

Im folgenden wird die Erfindung an Hand konkreter Ausführungsbeispiele unter Bezugnahme auf Zeichnungen näher erläutert.

Es zeigt:

Fig. 1 ein Schneidwerkzeug zum Herstellen eines Querrippen-Rohrelementes für Wärmetauscher und seine Formgebungsflächen, gemäß der Erfindung;

Fig. 2  dasselbe und das Querrippen-Rohrelement beim Unterschneiden der Metallschicht, gemäß der Erfindung;

Fig. 3  dasselbe, im Schnitt nach Linie III-III gemäß Fig. 2.

<u>Ausführungsform der Erfindung</u>

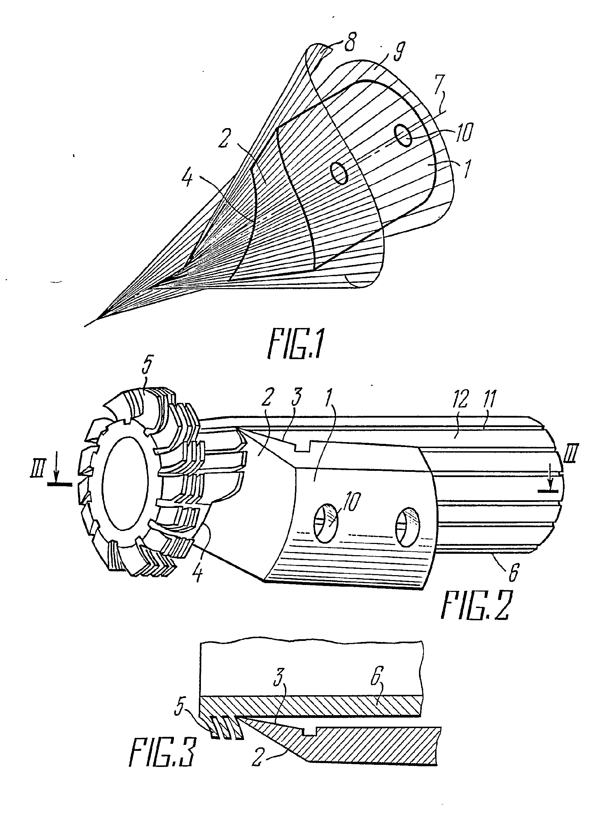

Das Schneidwerkzeug zum Herstellen eines Querrippen-Rohrelementes für Wärmetauscher stellt einen rohrförmigen Arbeitskörper mit einem zylindrische Flächen aufweisenden Aufnahmeteil 1 (Fig. 1) dar, der eine kegelige Spanfläche 2 und eine kegelige Freifläche 3 (Fig. 3) aufweist, welche sich schneiden,   eine Schneidkante 4 (Fig. 1) bilden und unterschiedliche Kegelwinkel haben. Die kegelige Spanfläche 2 ist schraubenförmig mit einer Steigung ausgebildet,  die den Abstand zwischen am Rohrrohling 6 für einen Wärmetauscher zu schneidenden Rippen 5 (Fig. 2) übersteigt, und ihre Erzeugende verläuft unter einem Winkel zur Achse 7 (Fig. 1), d.h. diese Fläche stellt einen Teil eines imaginären schiefen Helikoids 8 dar, während die kegelige Freifläche 3 ein Teil eines imaginären Kegels 9 ist, bei dem der Neigungswinkel der Erzeugenden, d.h. der Kegelwinkel, kleiner als der Neigungswinkel der Erzeugenden (Kegelwinkel) der kegeligen Spanfläche 2 ist, wobei die Spanfläche 2 und die Freifläche   3 gleichachsig sind. Es ist vorteilhaft, daß der Kegelwinkel der Freifläche im Bereich zwischen 15 und 25° liegt. Die Schneidkante 4 stellt auch eine Schraubenlinie mit  einer Steigung dar, die den Abstand zwischen den am Rohrrohling 6 zu schneidenden Rippen 5 übersteigt.   Am Aufnahmeteil 1     sind Halterungslöcher 10 vorhanden.

Die kegelige Freifläche 3 des Schneidwerkzeuges kann auch schraubenförmig mit einer Steigung ausgebildet werden, die der Steigung der kegeligen Spanfläche 2 des Arbeitskörpers des Schneidwerkzeuges gleich ist. Die Achse 7 der  kegeligen Spanfläche 2 und der kegeligen Freifläche 3 des Schneidwerkzeuges wird parallel und tiefer gegenüber der Achse des Rohrrohlings 6 angestellt. derart, daß die Schneidkante 4 ein stetiges Eindringen (Vertiefung) in den Rohrrohling 6 gewährleistet. Am Rohrrohling 6 sind vorgefertigte Längsrillen 11 (Fig. 2) vorhanden, welche auf seiner Oberfläche Vorsprünge 12 bilden, aus denen im Laufe des Schneidens die Rippen 5 geformt werden. Die Achse des Aufnahmeteils 1 des Schneidwerkzeuges fällt mit der Achse 7 der kegeligen Spanfläche 2 und der kegeligen Freifläche 3 zusammen.

Die Wirkungsweise des Schneidwerkzeuges zum Herstellen eines Querrippen-Rohrelementes für Wärmetauscher ist die folgende. Der Rohrrohling 6 wird in Drehung versetzt, während dem Schneidwerkzeug eine fortschreitende Bewegung längs der Achse des Rohrrohlings 6 verliehen wird. Dabei bilden sich die Rippen 5 durch Unterschneiden und Abbiegen der Metallschicht der Vorsprünge 12 des Rohrrohlings 6. Der Abstand zwischen den zu schneidenden Rippen 5 entspricht dem Betrag der fortschreitenden Bewegung des Schneidwerkzeuges während einer Umdrehung des Rohrrohlings 6.

Die obenbeschriebene Ausführung der Arbeitsflächen des Schneidwerkzeuges zum Herstellen eines Querrippen--Rohrelementes für Wärmetauscher bewirkt einen gleichbleibenden Neigungswinkel der Schneidkante sowie gleichbleibende Span- und Freiwinkel des Werkzeuges, wodurch eine minimale und über die gesamte Höhe der zu schneidenden Rippe gleichmäßige Schrumpfung sowie eine festere Verbindung der zu unterschneidenden Rippen mit dem Grundkörper des Rohrelementes sichergestellt wird. Unter solchen Schnittbedingungen können hohe Rippen hergestellt werden, wodurch die wirksame Wärmeaustauschfläche vergrößert und die wärmeübertragenden Parameter der Wärmetauscher verbessert werden. Die gleichachsige Ausführung der Arbeitsflächen des Schneidwerkzeuges vereinfacht seine Fertigungstechnologie, das Anschleifen und die Kontrolle der geometrischen Parameter des Schneidteils des Werkzeuges.

## Gewerbliche Verwertbarkeit

Das Schneidwerkzeug zum Herstellen eines Querrippen-
-Rohrelementes für Wärmetauscher eignet sich zum Herstellen von hocheffektiven Rohrelementen für Wärmetauscher, die in der elektronischen, Elektro- und energe-
tischen Industrie, in der Kälte- und Heiztechnik sowie
im Kraftfahrzeug- und Traktorenbau  eingesetzt werden.

Unter "kegelig" im Zusammenhang mit der Spanfläche 2 und
der Freifläche 3 wird jeweils ein Teil der Mantelfläche
von zwei auf einer Achse (gleichachsig) angeordneten
Kegeln mit unterschiedlichen Öffnungswinkeln verstanden.

## PATENTANSPRÜCHE

1. Schneidwerkzeug zum Herstellen eines Querrippen-Rohrelementes für Wärmetauscher, enthaltend einen Arbeitskörper mit einer kegeligen Spanfläche (2) und einer kegeligen Freifläche (3), die sich schneiden, eine Schneidkante (4) bilden und unterschiedliche Kegelwinkel aufweisen, dadurch g e k e n n z e i c h n e t , daß die kegelige Spanfläche (2) und die kegelige Freifläche (3) des Arbeitskörpers gleichachsig sind, wobei die kegelige Spanfläche (2) schraubenförmig mit einer Steigung ausgebildet ist, die den Abstand zwischen den zu schneidenden Rippen (5) des Rohrelementes des Wärmetauschers übersteigt.

2. Schneidwerkzeug nach Anspruch 1, dadurch g e k e n n z e i c h n e t , daß die kegelige Freifläche (3) des Arbeitskörpers schraubenförmig mit einer Steigung ausgebildet ist, die der Steigung der schraubenförmigen kegeligen Spanfläche (2) des Arbeitskörpers gleich ist.

*FIG.1*

*FIG.2*

*FIG.3*

# INTERNATIONAL SEARCH REPORT

International Application No PCT/SU 88/00063

## I. CLASSIFICATION OF SUBJECT MATTER (if several classification symbols apply, indicate all) [6]

According to International Patent Classification (IPC) or to both National Classification and IPC

IPC[4]    B 23 B 27/00

## II. FIELDS SEARCHED

### Minimum Documentation Searched [7]

| Classification System | Classification Symbols |
|---|---|
| IPC[4] | B 23 B 27/00; 27/10, 27/12, B 21 D 53/06 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, A1, 543462, (Mogilevsky filial Fiziko-tekhnicheskogo instituta AN Belorusskoi SSR) 21 April 1977 (21.04.77), see claim 1 | 1,2 |
| A | SU, A1, 607661 (Kramatorsky nauchnoissledova-telsky i proektnotekhnologichesky institut mashinostroenia) 25 April 1978 (25.04.78) see column 3 | 1,2 |
| A | SU, A1, 806272 (Mogilevskoe otdelenie Fiziko-tekhnicheskogo instituta AN Belorusskoi SSR) 25 May 1981 (25.05.81) see the claims | 1,2 |
| A | SU, A1, 1171219, (L.G.Gulyansky et al.) 7 August 1985 (07.08.85) see the claims | 1,2 |
| A | SU, A2, 1379011 (S.P. Devyatkin et al.), 7 March 1988 (07.03.88), see claims | 1,2 |
| A | US, A, 3753364 (Q-dot Corporation), 21 August 1973 (21.08.73) see the abstract | 1,2 |

* Special categories of cited documents: [10]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art.
"&" document member of the same patent family

## IV. CERTIFICATION

| Date of the Actual Completion of the International Search | Date of Mailing of this International Search Report |
|---|---|
| 14 December 1988 (14.12.88) | 22 December 1988 (22.12.88) |

| International Searching Authority | Signature of Authorized Officer |
|---|---|
| ISA/SU | |

Form PCT/ISA/210 (second sheet) (January 1985)

**FURTHER INFORMATION CONTINUED FROM THE SECOND SHEET**

| A | US, A, 3496752 (Union Carbide Corporation), 24 February 1970 (24.02.70) see the abstract | 1,2 |

--------

## V. ☐ OBSERVATIONS WHERE CERTAIN CLAIMS WERE FOUND UNSEARCHABLE [1]

This international search report has not been established in respect of certain claims under Article 17(2) (a) for the following reasons:

1. ☐ Claim numbers ............, because they relate to subject matter not required to be searched by this Authority, namely:

2. ☐ Claim numbers ............, because they relate to parts of the international application that do not comply with the prescribed requirements to such an extent that no meaningful international search can be carried out, specifically:

3. ☐ Claim numbers ............, because they are dependent claims and are not drafted in accordance with the second and third sentences of PCT Rule 6.4(a).

## VI. ☐ OBSERVATIONS WHERE UNITY OF INVENTION IS LACKING [2]

This International Searching Authority found multiple inventions in this international application as follows:

1. ☐ As all required additional search fees were timely paid by the applicant, this international search report covers all searchable claims of the international application.

2. ☐ As only some of the required additional search fees were timely paid by the applicant, this international search report covers only those claims of the international application for which fees were paid, specifically claims:

3. ☐ No required additional search fees were timely paid by the applicant. Consequently, this international search report is restricted to the invention first mentioned in the claims; it is covered by claim numbers:

4. ☐ As all searchable claims could be searched without effort justifying an additional fee, the International Searching Authority did not invite payment of any additional fee.

**Remark on Protest**

☐ The additional search fees were accompanied by applicant's protest.

☐ No protest accompanied the payment of additional search fees.

Form PCT/ISA/210 (supplemental sheet (2)) (January 1985)